# EUROPEAN PATENT SPECIFICATION

(11) **EP 2 318 456 B1**
(45) Date of publication and mention of the grant of the patent: **01.02.2017**
(21) Application number: 09768861.8
(22) Date of filing: 03.03.2009
(51) Int. Cl.: C08L 23/04, C08L 51/00, C08K 3/00

(54) **PIPE COMPRISING A POLYOLEFIN COMPOSITION REINFORCED WITH A FILLER**
ROHR ENTHALTEND FÜLLERVERSTÄRKTE POLYOLEFIN-ZUSAMMENSETZUNG
TUYAU COMPRENANT UNE COMPOSITION DE POLYOLÉFINE RENFORCÉE PAR UNE CHARGE

(30) Priority: 27.06.2008 EP 08011727
(43) Date of publication of application: 11.05.2011
(73) Proprietor: Borealis AG, 1220 Vienna (AT)
(72) Inventor: EK, Carl-Gustaf, S-426 58 Västra Frölunda (SE); HAGSTRAND, Per-Ola, S-444 46 Stenungsund (SE); PALMLÖF, Magnus, S-426 71 Västra Frölunda (SE)
(74) Representative: Kador & Partner
(86) International application number: PCT/EP2009/001501
(87) International publication number: WO 2009/156012

(56) References cited:
- EP-A- 1 916 673
- WO-A-2004/010040
- DE-A1- 3 306 909
- DE-C1- 3 530 364
- GB-A- 2 181 437
- JP-A- 56 163 143
- US-A1- 2005 059 783
- US-A1- 2008 114 134

## Description

The present invention relates to a polyolefin composition reinforced with a filler with improved stiffness, impact strength, pressure resistance and impact/stiffness balance as well as to the use of such a polyolefin composition for the preparation of pipes, in particular pipes for the transport of pressurized and non-pressurised fluids.

Different requirements are imposed on pipes for the transport of pressurized fluids (so-called pressure pipes) and for the transport of non-pressurized fluids (non-pressure pipes). While pressure pipes must be able to withstand an internal positive pressure, non-pressure pipes do not have to withstand such a pressure, but are required to withstand an external positive pressure. The higher outside pressure may be due to the earth load on a pipe when submerged in the soil, the groundwater pressure, traffic load, or clamping forces in indoor applications.

Non-pressure pipes made of polyolefin compositions must fulfil at least two fundamental criteria. Firstly, and very importantly, they must show sufficient stiffness to withstand external pressure without the "help" from internal counter-pressure. As a measure for the stiffness of a material may serve its tensile modulus. In this regard, by using a material with higher stiffness it is possible to either use less material and keep the same stiffness of the pipe or, alternatively, in order to have a higher resistance to external pressure, the ring stiffness can be increased by using the same or a higher amount of material in the pipe.

It is known that the stiffness of a polyolefin material can be increased by addition of an inorganic (mineral) filler, but in this regard it must be considered that a number of other important properties may suffer from such filler addition, mainly due to the lack of interaction between the filler and the matrix. It is also known that polyethylene is more sensitive in this regard than polypropylene.

For example, mineral filled polyethylene usually is suffering from insufficient long term properties. This effect is, for example, seen in pressure testing and in Constant Tensile Load (CTL) testing at high temperatures, and/or at high elongations/deflections and/or at longer times.

Furthermore, mineral filled polyethylene usually is suffering from a considerable drop in impact properties, especially at lower temperatures.

For heavy duty applications, polymeric materials may usually be reinforced by glass fibers to achieve high stiffness. However glass fibers dispersed in a matrix of a polyolefin resin, especially polyethylene resin suffer from a poor adhesion between the matrix and the fibers.

With polyolefin matrices it is usually particularly difficult to achieve strong adhesion to glass fibers. When stress is applied to glass fiber reinforced polyolefin resins, there occurs the problem of fiber-matrix debonding, especially for fibers that are oriented substantially perpendicular to the applied stress. The debonding may occur even at very low strain levels of a few percent. The fiber-matrix debonding will eventually lead to low strength properties as well as decrease in long term properties and durability.

To improve such shortcomings, it is known to coat glass fibers with various compounds containing silicon groups in order to promote the adhesion to the matrix.

JP 54064545 B1 discloses a polyolefin composition comprising an ethylene homo- or copolymer containing mainly ethylene that has been previously grafted with a silane compound; an olefin resin selected from the group consisting of polyethylene, popypropylene, polybutene, their copolymers and their copolymers with polar monomers; and an inorganic filler. Furthermore, it is known from EP 0 984 036 A2 that a polyolefin composition exhibits improved adhesion which comprises a polyolefin containing at least two ethylenically unsaturated groups capable of reacting to cure said polyolefin and an adhesion promoter comprising at least one organo-silicon compound comprising at least one silicon-bond alkenyloxy group and at least one silicon moisture-reactive group. By the organo-silicon compound, strong bonding to a variety of substrates such as metals or glass is reported.

From DE 3 530 364, a moulding composition is known which comprises an ethylene copolymer, a propylene copolymer, a further polyethylene, at least one polyolefin modified by grafting on an alkoxy silane compound in presence of an organic peroxide and up to 50 wt% of glass fibers. By the incorporation of the crosslinked polyolefin together with the glass fibers, an improvement of bending strength and shape retention at high temperatures is obtained.

Further documents related to crosslinked compositions of polyolefins with fillers are DE3530364, US2005/0597783, GB2181437, US2008/114134, WO2004/010040, DE3306909, EP1916673 and JP56163143.

In view of all the requirements described above, it is the object of the present invention to provide an improved polyolefin composition and in particular an improved polyethylene pipe which has an improved combination of properties, in particular which has an increased stiffness and at the same time high impact strength and pressure resistance.

The present invention is based on the surprising finding that the above mentioned objects can be achieved by providing a polyolefin composition comprising a a polyolefin base resin and an inorganic or organic filler.

This finding is all the more surprising because it has hitherto been considered impossible that a polyolefin base resin comprising a mineral filler would have sufficient long-term properties, impact properties with concomitant improved tensile properties.

Accordingly, the present invention provides a pipe according to claims 1 to 12 comprising a cross-linked polyolefin composition wherein the polyolefin composition has been subjected to cross-linking conditions.

It has been found that the cross-linked polyolefin composition according to the invention has a significantly increased stiffness as shown by its tensile modulus. Simultaneously, in contrast to what is typically observed, falling weight impact strength, pressure resistance and further specific relations between these properties are retained at superior levels compared to reference materials not comprising the cross-linked polyolefin composition according to the present invention.

The present invention further provides the use according to claim 13 of the above defined polyolefin composition for the production of a pipe.

Thus, the invention generally concerns a polyolefin composition comprising crosslinkable polymers, and more precisely it relates to a polyolefin composition which comprises a base resin comprising, preferably consisting of, a cross-linkable olefin homo- or copolymer which is cross-linkable under cross-linking conditions, optionally under the influence of at least one silanol condensation catalyst.

The cross-linking may be performed according to the silane cross-linking technology where the cross-linkable olefin homo- or copolymer may comprise hydrolysable silicon-containing groups which are subjected to moisture. The cross-linking may alternatively be performed by subjecting the cross-linkable olefin homo- or copolymer to free radical generating conditions in the presence of a cross-linking agent capable of generating free radicals.

In the sense of the present invention the term "base resin" denotes the entirety of polymeric components in the polyolefin composition according to the invention. Preferably, the base resin consists of the olefin homo- or copolymer (A),

It is further preferred that the base resin contains the olefin homo- or copolymer (A) in an amount of up to 100 wt.%, more preferably from 70 to 100 wt.%. The olefin homo- or copolymer (A) may also be a combination of two or more species of such a polymer.

The crosslinkable olefin homo-or copolymer (A) in the base resin may be an ethylene or propylene homopolymer or copolymer. If applying the silane cross-linking process, the polymer may contain crosslinkable silicon-containing groups introduced either by co-polymerisation or graft polymerisation.

According to a preferred embodiment of the present invention, a silicon group-containing polymer may be obtained by copolymerisation of an olefin, suitably ethylene, and an unsaturated silicon compound represented by the formula:

R₁SiR²_{q}Y_{3-q} (II)

Wherein R¹ is an ethylenically unsaturated hydrocarbyl, hydrocarbyloxy or (meth)acryloxy hydrocarbyl group, R² is an aliphatic saturated hydrocarbyl group, Y which may be same or different, is a hydrolysable organic group, and q is 0, 1 or 2. If there is more than one Y group, these do not have to be identical.

Special examples of the unsaturated silicon compound are those wherein R¹ is vinyl, allyl, isopropenyl, butenyl, cyclohexenyl or gamma-(meth)acryloxy propyl; Y is methoxy, ethoxy, formyloxy, acetoxy, propionyloxy or an alkyl- or arylamino group; and R², if present, is a methyl, ethyl, propyl, decyl or phenyl group.

A preferred unsaturated silane compound is represented by the formula

CH₂=CHSi(OA)₃ (III)

wherein A is a hydrocarbyl group having 1-8 carbon atoms, preferably 1-4 carbon atoms.

The most preferred compounds are vinyl trimethoxysilane, vinyl bismethoxyethoxysilane, vinyl triethoxysilane, gamma-(meth)acryloxypropyltrimethoxysilane, gamma(meth)acryloxypropyltriethoxysilane, and vinyl triacetoxysilane.

The copolymerisation of the olefin (ethylene) and the unsaturated silicon compound may be carried out under any suitable conditions resulting in the copolymerisation of the two monomers.

Preferably, the silicon compound-containing cross-linkable olefin copolymer (A) may comprise from 0.001 to about 15 wt%, more preferably from 0.01 to 5 wt.%, even more preferably from 0.1 to 3 wt.% of the silicon compounds based on the total weight of the olefin copolymer (A).

The cross-linkable olefin homo- or copolymer (A) according to the present invention may be any type as long as it is capable of cross-linking under suitable cross-linking conditions and in the presence of a filler (B).

As the olefin homo- or copolymer (A), polyethylene, polypropylene, polybutylene or a copolymer of these with another comonomer may preferably be used. As such a comonomer, one or more species may be copolymerised.

Such comonomers include (a) vinyl carboxylate esters, such as vinyl acetate and vinyl pivalate, (b) alpha-olefins, such as propene, I-butene, I-hexene, I-octene and 4-methyl-1-pentene, (c) (meth)acrylates, such as methyl(meth)acrylate, ethyl (meth)acrylate and butyl(meth)acrylate, (d) olefinically unsaturated carboxylic acids, such as (meth)acrylic acid, maleic acid and fumaric acid, (e) (meth)acrylic acid derivatives, such as (meth)acrylonitrile and (meth)acrylic amide, (f) vinyl ethers, such as vinyl methyl ether and vinyl phenyl ether, and (g) aromatic vinyl compounds, such as styrene and alpha-methyl styrene.

Preferably the composition includes a copolymer of ethylene and one or more alpha-olefin comonomers, preferably of one or more C₄ to C₁₀ alpha olefin comonomers.

Preferably, the comonomer is selected from the group of 1-butene, 1-hexene, 4-methyl-1-pentene, 1-octene and 1-decene. Most preferably, the comonomer is 1-butene and/or 1-hexene.

The cross-linkable olefin copolymer (A) may also be obtained by grafting. If using a graft polymer, this may have been produced e.g. by any of the two methods described in US 3,646,155 and US 4,117,195, respectively.

Preferably, the cross-linkable olefin copolymer (A) may be prepared by a silicon-grafting procedure and then preferably has a density of 920 kg/m³ or more, more preferably of 930 kg/m³ or more, still more preferably of 940 kg/m³ or more, still more preferably of 950 kg/m³ or more. The density may also be between 920 to 960 kg/m³.

The cross-linkable olefin copolymer (A) may also be obtained by a polymerisation of olefin monomers and silicon group-containing monomers and then preferably has a density of 900 to 940 kg/m³.

The cross-linkable olefin homo- or copolymer (A) may be unimodal or multimodal. Usually, a polyolefin composition comprising at least two polyolefin fractions, which have been produced under different polymerisation conditions resulting in different (weight average) molecular weights for the fractions, is referred to as "multimodal". The prefix "multi" relates to the number of different polymer fractions the composition is consisting of.

According to a preferred embodiment of the present invention a cross-linkable olefin copolymer (A) is used which can be subjected to the so-called moisture curing. Usually a silanol condensation catalyst is employed in such a moisture curing procedure. In the first step of this procedure, the silane groups are hydrolysed under the influence of water resulting in the splitting-off of alcohol and the formation of silanol groups. In a second step, the silanol groups are crosslinked by a condensation reaction splitting off water.

As the above silanol condensation catalyst any type may be used which is effective in such a procedure. However, it is specifically preferred to use a catalyst selected from the group consisting of inorganic acids such as sulphuric acid and hydrochloride acid, organic acid such as citric acid, stearic acid, acetic acid, sulfonic acid and alcanoic acids as dodecanoic acid, organic basis, carboxylic acids, organo-metallic compounds including organic titanates in complexes or carboxylates of lead, cobalt, iron, nickel, zinc and tin or a precursor of these compounds. Tin carboxylates such as dibutyltin dilaurate or dioctyltin dilaurate are preferred.

The silanol condensation catalyst may be used in an amount of about 0.0001 to 3 wt%, preferably about 0.001 to 2 wt% and most preferably about 0.005 to 1 wt%, based on the amount of the silicon group containing olefin copolymer (A).

The silanol condensation catalyst is preferably added to the crosslinkable polyolefin in the form of a master batch (e.g. mixed with a polymer) such as a homo- or copolymer of ethylene, e.g. PE-LD or EBA containing 3 to 30 wt% of butyl acrylate.

The silanol condensation catalyst may be used as a single type or in combination with another type. It may also be used in combination with another silanol condensation catalyst not mentioned above.

The polyolefin composition of the present invention may also be cross-linked by a cross-linking agent capable of generating free radicals. Such a crosslinking agent is defined to be any compound which can initiate radical polymerization. A crosslinking agent can be a compound capable of generating radicals when decomposed but also comprises the radicals obtained after decomposition. Preferably, the crosslinking agent contains at least one -O-O- bond or at least one -N=N- bond. More preferably, the crosslinking agent is a peroxide and/or a radical obtained therefrom after thermal decomposition. Preferably such a cross-linking agent capable of generating free radicals is a peroxide or an azo compound.

The crosslinking agent can be added to the polymer composition during the compounding step (i.e. e.g. when mixing the polyolefin with the filler), or before the compounding step in a separate process, or during extrusion of the polymer composition.

The base resin may also be and preferably is produced in a multistage process as disclosed e.g. in WO 92/12182 ("BORSTAR process").

Further, the polyolefin base resin preferably is an "in-situ"-blend. Such blends are preferably produced in a multistage process. However, an "in-situ"-blend may also be produced in one reaction stage by using two or more different kinds of catalyst.

The polymerisation catalysts include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst.

The term molecular weight where used herein denotes the weight average molecular weight M_{w}. This property may either be used directly, or the melt flow rate (MFR) may be used as a measure for it.

The term "inorganic or organic filler" is meant to comprise any mineral filler or non-mineral filler cabable of being homogeneously incorporated into the polyolefin composition. The filler may assume any shape such as spherical, irregular, acicular, fibrous or plate-like shape, preferably it is in the form of fibers or has a plate-like shape.

The inorganic filler is selected from the group consisting of a mineral glass filler, mica, wollastonite, feldspar and barytes.

Specifically preferred is a mineral glass filler which encompasses not only glass fibers in the classical sense but may also encompass spherical or pseudo-spherical particles such as glass spheres or glass bubbles. Preferably the mineral glass filler is selected from the group consisting of continuous glass fibers, chopped glass fibers, glass flakes, glass spheres and glass bubbles.

As an organic filler carbon fibers (including carbon whiskers) are also fillers according to claim 1.

In the composition according to the invention preferably the filler (B) is present in an amount of from 3 to 50 wt.%, preferably 4 to 30 wt.%, more preferably 5 to 20 wt.%, based on the total weight of the polyolefin composition.

In a preferred embodiment of the invention, the base resin comprising the cross-linkable olefin homo- or copolymer (A) has a MFR₅ of 0.1 to 10 g/10min, more preferably of 0.2 to 5 g/10min, still more preferably of 0.3 to 3 g/10min, even more preferably 0.4 to 2.0 g/10min and most preferably of 0.4 to 1.0 g/10min.

Further preferred, the base resin has a MFR₂₁ of 1 to 100 g/10min, more preferably of 2 to 50 g/10min, and most preferably of 5 to 30 g/10min.

The flow rate ratio FRR_{21/5} (the ratio between MFR₂₁ and MFR₅) of the base resin which is indicative for the broadness of the molecular weight distribution of a polymer preferably is from 5 to 60, more preferably from 15 to 55, even more preferably 30 to 50.

In addition to the base resin comprising the cross-linkable olefin homo- or copolymer (A) and the filler (B), usual additives for utilization with polyolefins, such as pigments (for example carbon black), stabilizers (antioxidant agents), acid scavengers and/or UV blocking agents, antistatic agents and utilization agents (such as processing aid agents) may be present in the polyethylene composition. Preferably, the amount of these additives is 10 wt% or below, further preferred 8 wt% or below, of the total composition.

The polyolefin compositions of the present invention are particularly suitable for the production of pipes for the transport of non-pressurized and pressurized fluids. Non-pressure pipes may also be used for cable and pipe protection.

Where herein the term "pipe" is used it is meant to comprise pipes as well as all supplementary parts for pipes such as fittings, valves, chambers and all other parts which are commonly necessary for a piping system.

The pipe according to present claims 1 to 12 has a significantly improved stiffness as compared to prior art materials. Accordingly, the pipe of the invention preferably has a tensile modulus determined according to ISO 527-2/1 B of at least 1200 MPa, more preferably at least 1300 MPa, even more preferably at least 1400 MPa.

Preferably, the pipe has a tensile modulus of 1200 MPa to not more than 7000 MPa, more preferably 1300 to not more than 6000 MPa, even more preferably 1400 to not more than 5500 MPa. It should be understood that each individual value between the indicated values is within the scope of the present invention as well.

The pipe according to the present invention still further preferably has an elongation at break of not less than 100%, more preferably not less than 150%, even more preferably not less than 200%, measured according to ISO 527/2/5A. The elongation at break may even be as high as 250% or even 280% or above. It should be understood that each individual value between the indicated values is within the scope of the present invention as well.

Still further, the impact resistance of the pipes of the invention is still sufficiently high in spite of the incorporation of the filler.

The pipe thus preferably has a Charpy Impact Strength at -20 °C of at least 50 kJ/m², more preferably of at least 70 kJ/m², and even more preferred of at least 80 kJ/m², in a Charpy notched test according to ISO 9854-1.

The pipes according to the invention preferably have an impact strength measured by the falling weight test (H₅₀) according to EN 1411:1996 of at least 800 mm, more preferably at least 1000 mm, even more preferably at least 1500 mm. It should be understood that each individual value between the indicated values is within the scope of the present invention as well.

It has surprisingly been found that the cross-linked polyolefin composition and the pipes according to the present invention have a superior balance between impact strength and stiffness, expressed as relationship between falling weight impact strength and tensile modulus compared to respective non cross-linked compositions. At a given mineral glass filler content, the inventive compositions and pipes have higher falling weight impact strength compared to the compositions and pipes comprising respective non cross-linked compositions.

The compositions and pipes according to the present invention also have a superior balance between impact strength and pressure resistance and superior balance between pressure resistance and stiffness as well as a superior balance of all three properties of impact strength, pressure resistance and stiffness. This superior behaviour will be detailed in the example section.

The pipes according to the invention preferably have a pressure resistance of at least 600 h, more preferably at least 700 h, even more preferably at least 800 h at 11 MPa and 20 °C, measured according to ISO 1167. The pipes may further have a pressure resistance of at least 500 h, more preferably at least 600 h at 13 MPa and 20 °C, measured according to ISO 1167. The pipes may further have a pressure resistance of at least 100 h, more preferably at least 300 h, even more preferably at least 800 h at 4.5 MPa and 80 °C, measured according to ISO 1167. It should be understood that each individual value between the indicated values is within the scope of the present invention as well.

According to a preferred embodiment the pipes of the present invention have a pressure resistance of at least 100 h, more preferably at least 300 h, even more preferably at least 800 h at 4.5 MPa and 80 °C, measured according to ISO 1167 in combination with a tensile modulus of 1200 MPa to not more than 7.000 MPa, more preferably 1300 to not more than 6000 MPa, even more preferably 1400 to not more than 5500 MPa, measured according to ISO 527-2/1 B.

It is also preferred that the pipes of the present invention have the above preferred ranges for the pressure resistance in combination with a falling weight impact strength measured by the falling weight test (H₅₀) according to EN 1411:1996 of at least 800 mm, more preferably at least 1000 mm and even more preferred at least 1500 mm.

It is also preferred that the pipes of the present invention have the above preferred ranges for the falling weight impact strength in combination with a tensile modulus of 1200 MPa to not more than 7000 MPa, more preferably 1300 to not more than 6000 MPa, even more preferably 1400 to not more than 5500 MPa, measured according to ISO 527-2/1 B.

It is further preferred that the pipes of the present invention have any of the above preferred ranges for the falling weight impact strength in combination with any of the above preferred ranges for the tensile modulus and any of the above preferred ranges for the pressure resistance.

It is a specific advantage of the present invention that non-treated glass fibers may be used which need not be subjected to any coating procedure, which is usually done for increasing the compatibility and adhesion properties of glass fibers to a polyolefin matrix resin.

If the polyolefin composition is used for the preparation of a non-pressure pipe, such a pipe may be of any desired design. Preferred pipes are solid wall pipes with an inner diameter between 5 to 4000 mm, more preferably between 10 to 3000 mm, even more preferably between 20 to 2500 mm and most preferably between 50 to 2000 mm. Further preferred pipes are structured wall pipes such as corrugated-wall pipes, preferably of a diameter of 3 m or below.

Particularly preferred are multilayer-wall pipes with or without hollow sections with diameters of at most 2500 mm, more preferably at most 3000 mm. Pipes are preferably manufactured in a process where the fibres are oriented in the circumferential direction e.g. based on a spiral wounding process or via a so called cone extruder as e.g. in US 5,387,386. As a particular example of a non-pressure pipe road culverts may be mentioned. Preferably, such road culverts have a diameter of 0.6 to 3 m.

As mentioned, the pipe of the invention may be used for various purposes such as for drainage and for cable and pipe protection. The term "drainage" comprises land and road drainage, storm water transport, and indoor soil and waste discharge (indoor sewage).

The pipes of the invention may preferably be produced by extrusion in a pipe extruder. After the extruder, the pipe is taken off over a calibrating sleeve and cooled. The pipe can also be manufactured in an extrusion winding process in diameters of 2 to 3 m or more. The pipe can also be processed in a corrugation device in combination with or close to the calibration step, e.g. for the manufacture of multilayer pipes of corrugated twin-wall or multilayer-wall design, with or without hollow section, or multilayer pipes with ribbed design.

Pipe parts such as valves, chambers are prepared by conventional processes such as injection moulding, blow moulding.

Summarizing the above, the present invention provides the following advantages:

The above-defined polyolefin composition of the present invention provides a polyolefin base resin reinforced by a relatively low amount of a filler which firmly adheres to the polyolefin and, thus, improved mechanical properties such as stiffness, impact strength, and pressure resistance are obtained which makes the inventive compositions especially suitable for the preparation of a pipe.

Moreover, the above-defined polyolefin compositions of the present invention are capable of providing superior relationships between several individual properties of the polyolefin composition characterizing a surprisingly new and advantageous property profile giving an advanced overall performance.

Consequently filler-reinforced polyolefin compositions and pipes with an unexpected and advantageous property profile are obtained by the present invention for the first time. Especially pipes are obtainable with lower wall thicknesses with preserved or even improved mechanical properties as set out above. In turn, larger pipe diameters may be achieved. Moreover the time for cross-linking may be reduced using the cross-linking technique of the present invention which in turn saves time and production costs.

### Examples

### 1. Definitions and measurement methods

### a) Density

Density is measured according to ISO 1183/ISO 1872-2B.

### b) Melt Flow Rate/Flow Rate Ratio

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190°C and may be determined at different loadings such as 2.16 kg (MFR₂), 5 kg (MFR₅) or 21.6 kg (MFR₂₁).

The quantity FRR (flow rate ratio) is an indication of molecular weight distribution and denotes the ratio of flow rates at different loadings. Thus, FRR_{21/5} denotes the value of MFR₂₁/MFR₅.

### c) Tensile modulus of samples cut from pipes in axial direction

The tensile modulus was determined on dog bone shaped samples with a length of 165 mm, a thickness of 3 mm and a width of 10 mm in the middle section, according to ISO 527-2/1 B at 23 °C. The elongation was measured with a 50 mm gauge length extensometer. A test speed of 1 mm/min was applied, while a 1 kN load cell was used. 10 samples per material were tested.

### d) Pipe falling weight impact

Pipe falling weight impact is determined according to EN 1411: 1996. Accordingly, the H₅₀ value (the height where 50% of the samples fail) for a pipe with a length of 200 ± 10 mm and an outer diameter of 32 mm with a wall thickness of 3 mm and using a 0.5 kg striker is measured at -20 °C. The samples were conditioned at -20 °C for 16 h in air. The H₅₀ value is calculated in millimeters.

### e) Pressure resistance testing

The pressure testing was carried out according to ISO 1167. Pipes with a diameter of 32 mm were tested at different temperatures and inner pressure. Especially the lifetime of test pipes was determined at 11 MPa and 20 °C, 13 MPa and 20 °C and 4.5 MPa and 80 °C. The results were expressed in hours (lifetime) until the pipe bursted.

### 2. Production of polymer compositions and pipes

Base resins were produced according to techniques known in the art.

As a catalyst, the supported catalyst as used in the examples of EP 1 137 707 was used.

The compositions were compounded/melt homogenized in a Buss Co-Kneader MDK 46/E-11L/D. Polymer and additives (pellets and/or powder) were fed into the first mixer inlet of the Buss Co-Kneader which is a mixer with a downstream discharge single screw extruder with a pelletizing unit cutting pellets in the molten stage and cooled via water. The mixer temperature was set to 140 to 165 °C from the first inlet to the outlet and the discharge extruder temperature was set to about 165 °C. The polymer was fed into the first mixer inlet and the glass fibers, as specified above, were fed into the molten polymer in the second mixer inlet downstream in order to minimise excessive breakage of the fibres. The mixer was operated at 170 to 190 rpm. The throughput was about 100 to 120 kg/h.

As polyethylene base resins and mineral glass fillers the following products were used:

### (a) Polymers:

**PE1** is a non-crosslinkable HDPE having a density of 954 kg/m³ and a MFR₂ of 4 g/10min manufactured on a Ziegler-Natta catalyst.

**PE2** is a non cross-linked high density polyethylene (HDPE) resin having a density of 963 kg/m³ and a MFR₂ of 8 g/10 min manufactured on a Ziegler-Natta catalyst. This base resin was grafted by compounding with vinyltrimethoxysilane (VTMS) on a compounding line fit for the purpose (Berstorff with L/D ratio of 50). 2 weight% of a VTMS cocktail (VPS-136-05-008 from Degussa) including small amounts of peroxide was injected into the compounding line.The grafted resin had a density of 954 kg/m³ and a MFR₅ of 3 g/10 min.

**PE3** is the above resin PE2 which was subjected to cross-linking by adding 5 wt.%, based on the total weight of the composition, of a silanol condensation cross-linking catalyst masterbatch. The catalyst masterbatch was prepared as follows: PE1 was mixed with a tin type cross-linking catalyst (DOTL) and a phenolic antioxidant so that the final amount of tin catalyst in PE3 was 0.05 wt%. The cross-linking was performed at 95 °C for 24 h in a water bath.

### (b) Mineral glass fillers

Taiwan glass, chopped strand glass fibers (Product No. 144 A) were used in the materials which contained a glass fiber filler. These glass fibers had a fiber length of 4.8 mm and are also compatible with polypropylene matrices

The formulation of the compositions is given in Table 1 below.

**Table 1**

| **Polymer** | **Glass fiber content [wt%]** |
|---|---|
| PE1-1 | 0 |
| PE1-2 | 5 |
| PE1-3 | 10 |
| PE1-4 | 15 |
| PE2-1 | 0 |
| PE2-2 | 5 |
| PE2-3 | 10 |
| PE2-4 | 15 |
| PE3-1 | 0 |
| PE3-2 | 5 |
| PE3-3 | 10 |
| PE3-4 | 15 |

Pipes were produced by feeding the composition/base resin in pellet form into a conventional Battenfeld pipe extruder for extrusion with a line speed around 2 m/min into pipes with a diameter of 32 mm, a wall thickness of 3 mm and a length of 500 mm. The melt pressure was 84 bar, the melt temperature was about 190 to 200 °C and the output was 31.7 kg/h.

For polymer PE3 5 wt% of the crosslinking catalyst master batch was fed into the pipe extruder together with the base resin.

After leaving the annular die, the pipe is taken off over a calibrating mandrel, usually accompanied by cooling of the pipe by air cooling and/or water cooling such as e.g. water spraying, optionally also with inner water cooling.

The pipes may also be processed in corrugating devices in combination or close to the calibration step, for example for manufacturing of multilayer pipes of corrugated double/triple wall design with or without hollow sections or multilayer pipes with ribbed design.

Melt homogenisation and pipe production can also be made in one step without an intermediate solidification and pelletisation step, e.g. combined twin-screw extruder for both compounding and manufacturing of pipes.

The formulations of the inventive examples 1 to 3 and the comparative examples 1 to 9 were used to produce pipes, as described above.

The results from the mechanical tests specified above, are given in Table 2 below.

**Table 2**

| | | | | | **Pipe Pressure performance** | | |
|---|---|---|---|---|---|---|---|
| **Polymer** | **Example** | **Glass fiber content [wt.%]** | **Tensile Modulus [MPa]** | **Falling weight impact H₅₀ [mm]** | **Lifetime 11 MPa 20°C [hours]** | **Lifetime 13 MPa 20°C [hours]** | **Lifetime 4.5 MPa 80°C [hours]** |
| PE1-1 | CE 1 | 0 | 1170 | 4200 | > 800 | | 9 |
| PE1-2 | CE 2 | 5 | 1730 | 972 | | | |
| PE1-3 | CE 3 | 10 | 2222 | 600 | 110 | | 10 |
| PE1-4 | CE 4 | 15 | 2588 | 570 | | | |
| PE2-1 | CE 5 | 0 | 1049 | 4000 | > 500 | | > 800 |
| PE2-2 | CE 6 | 5 | 1652 | 570 | | | |
| PE2-3 | CE 7 | 10 | 1976 | 400 | 115 | 21 | 1,2 |
| PE2-4 | CE 8 | 15 | 2382 | 480 | | | |
| PE3-1 | CE 9 | 0 | 1134 | 4000 | > 500 | | >800 |
| PE3-2 | Ex. 1 | 5 | 1455 | 2500 | | | |
| PE3-3 | Ex. 2 | 10 | 1925 | 1783 | > 800 | > 600 | >800 |
| PE3-4 | Ex. 3 | 15 | 2367 | 1792 | | | |

It can be seen from the above Table 2 that the compositions according to the present invention were able to significantly improve various parameters of pipes comprising these compositions as follows:

The falling weight impact strength decreased with increasing glass fiber content, however, the reduction is considerably less for the cross-linked compositions of the present invention compared to the non cross-linked comparative compositions. Thus, with cross-linking it is possible to achieve a significantly better balance between stiffness and falling weight impact strength.

The addition of glass fibres reduced the pressure performance of non cross-linked comparative compositions. The cross-linked compositions of the invention, on the other hand, substantially maintained their pressure performance. It is evident from the examples that tensile modulus increased with increasing glass fibre content while at the same time the pressure resistance (lifetime in hours) of the pipes comprising cross-linked compositions could be maintained despite the presence of glass fibers. In comparison, the pipes comprising the non-crosslinked comparative compositions showed a steep decline in pressure resistance at increasing glass fiber contents. For example, at 10% glass fiber concentration the pressure performance of the cross-linked material is superior to the non cross-linked materials.

In the examples, glass fibres are primarily oriented in the axial direction from the extrusion process. However it is well possible to arrange a more pronounced orientation in the circumferential direction. In these embodiments a considerable increase in pressure performance can be reached.

## Claims

1. A pipe comprising a cross-linked polyolefin composition which is obtained by subjecting a polyolefin composition to cross-linking conditions, the polyolefin composition comprising:
- a base resin comprising a cross-linkable olefin homo- or copolymer (A) which comprises hydrolysable silicon-containing groups, and
- a filler (B) selected from the group consisting of a mineral glass filler, mica, wollastonite, feldspar, barytes, and carbon fibers.

2. The pipe according to claim 1, wherein the cross-linkable olefin homo-or copolymer (A) is a polyethylene.

3. The pipe according to any of the preceding claims, wherein the amount of the silicon-containing groups in the cross-linkable olefin homo- or copolymer (A) is from 0.001 to about 15 wt%, based on the total weight of the cross-linkable olefin homo- or copolymer (A).

4. The pipe according to any of the preceding claims, wherein the cross-linkable olefin homo- or copolymer (A) is silane-grafted and has a density of 920 to 960 kg/m³.

5. The pipe according to any of the preceding claims, wherein the hydrolysable silicon-containing groups are introduced into the olefin homo- or copolymer (A) by incorporation of an unsaturated silicon-compound represented by the formula:
R¹SiR²_{q}Y_{3-q} (I)
wherein
R¹ is an ethylenically unsaturated hydrocarbyl, hydrocarbyloxy or (meth)acryloxy hydrocarbyl group,
R² is an aliphatic saturated hydrocarbyl group,
Y which may be the same or different, is a hydrolysable organic group and
q is 0, 1 or 2.

6. The pipe according to claim 1, wherein the filler (B) is contained in an amount of from 3 to 50 wt.%, based on the total weight of the polyolefin composition.

7. The pipe according to any of the preceding claims, wherein the polyolefin composition is cross-linked in a moisture curing procedure using a silanol condensation catalyst.

8. The pipe according to claim 7, wherein the silanol condensation catalyst is selected from the group consisting of inorganic acids such as sulphuric acid and hydrochloric acid, organic acids such as citric acid, stearic acid, acetic acid, sulphonic acid and alkanoic acids as dodecanoic acid, organic bases, carboxylic acids, organometallic compounds including organic titanates and complexes or carboxylates of lead, cobalt, iron, nickel, zinc and tin or a precursor of these compounds.

9. The pipe according to any of the preceding claims having a tensile modulus of from 1200 MPa to not more than 7000 MPa, measured according to ISO 527-2/1 B.

10. The pipe according to any of the preceding claims having an impact strength measured by the falling weight test (H₅₀) according to EN 1411:1996 of at least 800 mm.

11. The pipe according to any of the preceding claims having a pressure resistance of at least 100 h at 4.5 MPa and 80 °C, measured according to ISO 1167 in combination with a tensile modulus of 1200 MPa to not more than 7.000 MPa, measured according to ISO 527-2/1 B.

12. A pipe according to any of the preceding claims, which is a non-pressure pipe or a pressure pipe.

13. Use of a polyolefin composition for the preparation of a pipe, the composition comprising:
- a base resin comprising a cross-linkable olefin homo- or copolymer (A) which comprises hydrolysable silicon-containing groups, and
- a filler (B) selected from the group consisting of a mineral glass filler, mica, wollastonite, feldspar, barytes, and carbon fibers,
wherein the composition has been subjected to cross-linking conditions.

## Patentansprüche

1. Rohr, umfassend eine vernetzte Polyolefinzusammensetzung, die erhalten wird, indem eine Polyolefinzusammensetzung Vernetzungsbedingungen ausgesetzt wird, wobei die Polyolefinzusammensetzung das Folgende umfasst:
- ein Basisharz, umfassend ein vernetzbares Olefinhomo- oder -copolymer (A), das hydrolysierbare siliziumhaltige Gruppen umfasst, und
- einen Füllstoff (B), der aus der Gruppe ausgewählt ist, bestehend aus einem mineralischen Glasfüllstoff, Glimmer, Wollastonit, Feldspat, Baryten und Kohlenstofffasern.

2. Rohr nach Anspruch 1, wobei das vernetzbare Olefinhomo- oder -copolymer (A) ein Polyethylen ist.

3. Rohr nach einem der vorhergehenden Ansprüche, wobei die Menge der siliziumhaltigen Gruppen in dem vernetzbaren Olefinhomo- oder -copolymer (A) 0,001 bis etwa 15 Gew.-% beträgt, basierend auf dem Gesamtgewicht des vernetzbaren Olefinhomo- oder -copolymers (A).

4. Rohr nach einem der vorhergehenden Ansprüche, wobei das vernetzbare Olefinhomo- oder -copolymer (A) silangepfropft ist und eine Dichte von 920 bis 960 kg/m³ aufweist.

5. Rohr nach einem der vorhergehenden Ansprüche, wobei die hydrolysierbaren siliziumhaltigen Gruppen in das Olefinhomo- oder -copolymer (A) eingeführt werden, indem eine ungesättigte Siliziumverbindung eingebaut wird, die durch die folgende Formel repräsentiert ist:
R¹SiR²_{q}Y_{3-q} (I)
wobei
R¹ eine ethylenisch ungesättigte Hydrocarbyl-, Hydrocarbyloxy- oder (Meth)acryloxyhydrocarbylgruppe ist,
R² eine aliphatische gesättigte Hydrocarbylgruppe ist,
Y, das gleich oder verschieden sein kann, eine hydrolysierbare organische Gruppe ist, und
q 0, 1 oder 2 ist.

6. Rohr nach Anspruch 1, wobei der Füllstoff (B) mit einer Menge von 3 bis 50 Gew.-% enthalten ist, basierend auf dem Gesamtgewicht der Polyolefinzusammensetzung.

7. Rohr nach einem der vorhergehenden Ansprüche, wobei die Polyolefinzusammensetzung in einem Feuchtigkeitshärtungsverfahren unter Verwendung eines Silanol-Kondensationskatalysators vernetzt wird.

8. Rohr nach Anspruch 7, wobei der Silanol-Kondensationskatalysator aus der Gruppe ausgewählt ist, bestehend aus anorganischen Säuren, wie zum Beispiel Schwefelsäure und Salzsäure, organischen Säuren, wie zum Beispiel Zitronensäure, Stearinsäure, Essigsäure, Sulfonsäure und Alkansäuren, wie Dodecansäure, organischen Basen, Carbonsäuren, organometallischen Verbindungen, einschließlich organischen Titanaten und Komplexen oder Carboxylaten von Blei, Kobalt, Eisen, Nickel, Zink und Zinn oder einem Vorläufer dieser Verbindungen.

9. Rohr nach einem der vorhergehenden Ansprüche, das einen Zugmodul von 1200 MPa bis nicht mehr als 7000 MPa aufweist, gemessen gemäß ISO 527-2/1 B.

10. Rohr nach einem der vorhergehenden Ansprüche, das eine Schlagzähigkeit von mindestens 800 mm aufweist, gemessen mittels des Fallgewichtstests (H₅₀) nach EN 1411:1996.

11. Rohr nach einem der vorhergehenden Ansprüche, das eine Druckbeständigkeit von mindestens 100 h bei 4,5 MPa und 80 °C, gemessen gemäß ISO 1167, in Kombination mit einem Zugmodul von 1200 MPa bis nicht mehr als 7000 MPa aufweist, gemessen gemäß ISO 527-2/1 B.

12. Rohr nach einem der vorhergehenden Ansprüche, das ein druckloses Rohr oder ein Druckrohr ist.

13. Verwendung einer Polyolefinzusammensetzung zur Herstellung eines Rohrs, wobei die Zusammensetzung das Folgende umfasst:
- ein Basisharz, umfassend ein vernetzbares Olefinhomo- oder -copolymer (A), das hydrolysierbare siliziumhaltige Gruppen umfasst, und
- einen Füllstoff (B), der aus der Gruppe ausgewählt ist, bestehend aus einem mineralischen Glasfüllstoff, Glimmer, Wollastonit, Feldspat, Baryten und Kohlenstofffasern,
wobei die Zusammensetzung Vernetzungsbedingungen ausgesetzt wurde.

## Revendications

1. Tuyau comprenant une composition de polyoléfine réticulée qui est obtenue par soumission d'une composition de polyoléfine à des conditions de réticulation, la composition de polyoléfine comprenant :
- une résine de base comprenant un homo- ou co-polymère d'oléfine réticulable (A) qui comprend des groupes siliconés hydrolysables, et
- une charge (B) choisie dans le groupe constitué par une charge de verre minéral, le mica, la wollastonite, le feldspath, les barytes, et les fibres de carbone.

2. Tuyau selon la revendication 1, dans lequel l'homo- ou co-polymère d'oléfine réticulable (A) est un polyéthylène.

3. Tuyau selon l'une quelconque des revendications précédentes, dans lequel la quantité de groupes siliconés dans l'homo- ou co-polymère d'oléfine réticulable (A) est de 0,001 à environ 15 % en poids par rapport au poids total de l'homo- ou co-polymère d'oléfine réticulable (A).

4. Tuyau selon l'une quelconque des revendications précédentes, dans lequel l'homo- ou co-polymère d'oléfine réticulable (A) est greffé de silane et a une masse volumique de 920 à 960 kg/m³.

5. Tuyau selon l'une quelconque des revendications précédentes, dans lequel les groupes siliconés hydrolysables sont introduits dans l'homo- ou co-polymère d'oléfine (A) par incorporation d'un composé siliconé insaturé représenté par la formule :
R¹SiR²_{q}Y_{3-q} (I)
dans laquelle
R¹ est un groupe à insaturation éthylénique hydrocarbyle, hydrocarbyloxy ou (méth)acryloxy-hydrocarbyle,
R² est un groupe hydrocarbyle saturé aliphatique,
Y, qui peut être identique ou différent, est un groupe organique hydrolysable, et
q vaut 0, 1 ou 2.

6. Tuyau selon la revendication 1, dans lequel la charge (B) est contenue en une quantité de 3 à 50 % en poids par rapport au poids total de la composition de polyoléfine.

7. Tuyau selon l'une quelconque des revendications précédentes, dans lequel la composition de polyoléfine est réticulée dans une procédure de durcissement à l'humidité utilisant un catalyseur de condensation au silanol.

8. Tuyau selon la revendication 7, dans lequel le catalyseur de condensation au silanol est choisi dans le groupe constitué par les acides inorganiques tels que l'acide sulfurique et l'acide chlorhydrique, les acides organiques tels que l'acide citrique, l'acide stéarique, l'acide acétique, l'acide sulfonique et les acides alcanoïques tels que l'acide dodécanoïque, les bases organiques, les acides carboxyliques, les composés organométalliques, y compris les titanates organiques et les complexes ou carboxylates de plomb, cobalt, fer, nickel, zinc et étain, ou un précurseur de ces composés.

9. Tuyau selon l'une quelconque des revendications précédentes, ayant un module en traction de 1200 MPa à au plus 7000 MPa, mesuré conformément à la norme ISO 527-2/1B.

10. Tuyau selon l'une quelconque des revendications précédentes, ayant une résistance au choc, mesurée par le test de la masse tombante (H₅₀) conformément à la norme EN 1411:1996, d'au moins 800 mm.

11. Tuyau selon l'une quelconque des revendications précédentes, ayant une résistance à la pression d'au moins 100 h sous 4,5 MPa et à 80°C, mesurée conformément à la norme ISO 1167, en combinaison avec un module en traction de 1200 MPa à au plus 7000 MPa, mesuré conformément à la norme ISO 527-2/1B.

12. Tuyau selon l'une quelconque des revendications précédentes, qui est un tuyau sans pression ou un tuyau de pression.

13. Utilisation d'une composition de polyoléfine pour la préparation d'un tuyau, la composition comprenant :
- une résine de base comprenant un homo- ou co-polymère d'oléfine réticulable (A) qui comprend des groupes siliconés hydrolysables, et
- une charge (B) choisie dans le groupe constitué par une charge de verre minéral, le mica, la wollastonite, le feldspath, les barytes, et les fibres de carbone,
dans laquelle la composition a été soumise à des conditions de réticulation.
